# EUROPEAN PATENT APPLICATION

(11) **EP 1 593 531 A2**
(43) Date of publication of application: **09.11.2005**
(21) Application number: 05014987.1
(22) Date of filing: 21.06.2001
(51) Int. Cl.: B60C 11/12, B60C 11/11, B60C 11/13

(54) **Pneumatic tires**

(30) Priority: 22.06.2000 JP 2000187148; 08.09.2000 JP 2000273229
(62) Divisional of application: 01305380.6
(71) Applicant: Bridgestone Corporation, Tokyo 104-8340 (JP)
(72) Inventor: Ito, Takahiro, Kodaira City (JP); Matsuzaki, Jun, Kodaira City (JP)
(74) Representative: Whalley, Kevin

(57) **Abstract**

A pneumatic tire 110 comprising a tread portion 112 having a plurality of blocks 126, each of which blocks being defined into substantially a quadrilateral form by two pairs of main grooves each having a different angle with respect to an equatorial plane CL of the tire and having a plurality of blocks, each of which blocks having at least one sub-groove 128 crossing with the block, characterized in that at least a central main portion 128A of the sub-groove is inclined substantially in the same direction as any one of diagonals 130 of the block and is arranged at a position offset from the diagonal.

## Description

### BACKGROUND OF THE INVENTION

### 1. Field of the Invention

This invention relates to a pneumatic tire having a tread life improved by suppressing irregular wear of a tread, and more particularly to a pneumatic tire comprising a tread portion having a plurality of blocks each defined in substantially a quadrilateral shape by two pairs of main grooves having different angles with respect to an equatorial plane of the tire.

### 2. Description of Related Art

As a radial tire for a passenger car, there have been known pneumatic tires having a block-type tread pattern in which a plurality of block rows are formed in a surface of a tread contacting with ground.
In general, such a block is defined in substantially a quadrilateral shape by two pairs of main grooves having different angles with respect to an equatorial plane of the tire. In such a pneumatic tire, a sub-groove(s) such as sipe or the like is formed in each of the blocks in order to improve the wet performances.

When the sub-groove such as the sipe or the like is formed in the block, the edge factors are increased to improve wet performances, but the rigidity of the block is decreased and hence there is caused a fear of degrading dry performances.

The sipe is usually formed in the block so as to extend from an outer surface of the block in a direction substantially perpendicular to the block surface. In this case, there is a tendency of causing irregular wear because the wearing is progressed due to the falling-down of a portion of the block in the vicinity of the sipe. Moreover, the term "falling-down of a portion of block" used herein means a deformation of the block when the force is applied to' a surface of the block.

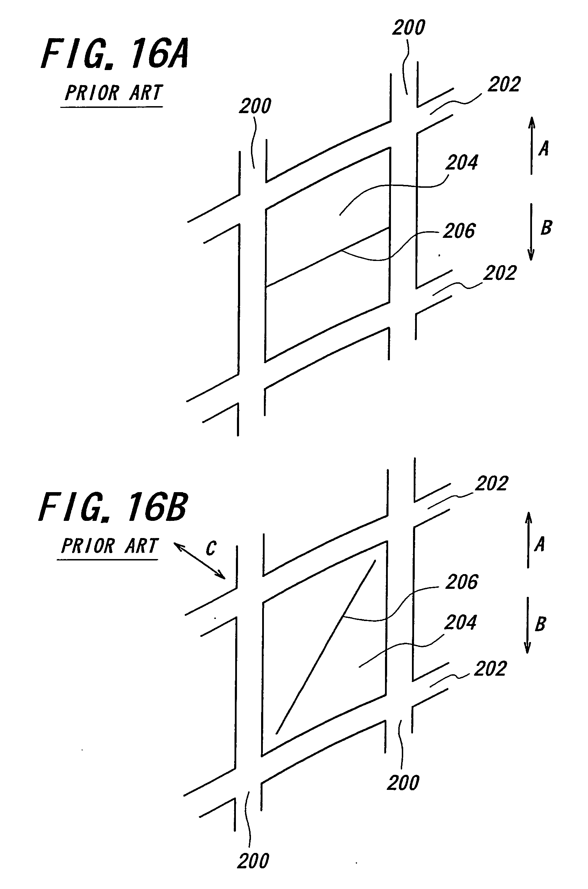

And also, as shown in FIG. 16A, when a block 204 having substantially a parallelogram defined by a pair of main grooves 200 extending in a circumferential direction (shown by arrows A and B) and a pair of another main grooves 202 crossing with the main grooves 200 is divided into two equal parts by a sub-groove 206 formed in the block 204 in parallel to the main groove 202, there is caused a problem of lowering the rigidity of the block 204 in the circumferential direction of the tire.

Furthermore, as shown in FIG. 16B, when the sub-groove 206 is formed in the block 204 having substantially a parallelogram along a long diagonal thereof, the block 204 is divided into two small block parts each having substantially an elongated triangular form and hence there is caused a problem of considerably lowering the rigidity of the block 204 in a direction perpendicular to the longitudinal direction of the sub-groove 206 (shown by an arrow C).

In case of super-high performance passenger cars, the rotating direction of the tire is specified and the tire size frequently differs between front and rear wheels, so that it is frequently impossible to conduct the tire rotation in use. Therefore, the tire is at a state of being continuously and easily subjected to the force of a given direction.

To this end, in the block portion near to the sipes evenly arranged with respect to the conventional input direction is recognized a tendency of growing irregular wear in only a specified direction in accordance with the tire mounting position. And also, the width of the sipe is narrowed under a certain input condition, so that there is a tendency of lowering the drainage property in the block.

These tendencies are considered to result from the falling-down of the block in the vicinity of the sipe. Therefore, if the falling-down of the block can be controlled, it is ought to suppress the irregular wear and improve the steering stability on a wet road surface.

### SUMMARY OF THE INVENTION

Under the above circumstances, it is an object of the invention to provide a pneumatic tire capable of improving the wet performances while maintaining the rigidity of the block and suppressing the occurrence of irregular wear.

It is another object of the invention to provide a pneumatic tire capable of improving the wear resistance in correspondence to the difference of the input direction between external forces generated due to the difference of the tire mounting positions.

According to a first aspect of the invention, there is the provision of in a pneumatic tire comprising a tread portion having a plurality of blocks, each of which blocks having at least one sub-groove formed at a given inclination angle with respect to an equatorial plane of the tire, an improvement wherein a central main portion of the sub-groove is formed so that a groove bottom is inclined from a surface side of the block in a direction of a main stress applied from a road surface to the block.

The action of such a pneumatic tire will be explained below.

In the pneumatic tire having a block-type tread pattern, the central main portion of the sub-groove formed in the block is formed so that the groove bottom is inclined from the surface side of the block in a direction of a largest main stress among external forces applied from the road surface to the block.

Since the input directions of the external forces usually differ every the tire mounting position, if the pneumatic tire as defined in the invention is mounted onto a super-high performance passenger car making no tire rotation, the wear of the tire is grown in only a specified direction decided every the tire mounting position to cause irregular wear due to the falling-down of a portion of the block around the sub-groove. In the invention, the central main portion of the sub-groove is formed so as to be inclined toward the groove bottom thereof, whereby the rigidity of the portion of the block in the vicinity of the sub-groove is changed to suppress the irregular wear.

That is, the central main portion of the sub-groove is inclined in the direction of the largest main stress among the external forces applied from the road surface to the block, whereby the rigidity of the block portion in the vicinity of the sub-groove fallen down toward the sub-groove through the external force can be enhanced to suppress the falling-down of the block and hence the occurrence of the irregular wear.

Although the arranging position and the size of the sub-groove are the same as in the conventional one, the wear resistance can be improved in correspondence to the difference between the input directions of the external forces generated by the difference between the tire mounting positions at a state of maintaining the dry gripping and wet gripping properties equal to those of the conventional tire and hence the long tread life of the tire can be attained.

In a preferable embodiment of the first aspect, the block is shaped in substantially a quadrilateral form and the central main portion of the sub-groove is extended along a short diagonal of the block. In this case, the above effect can be more enhanced.

In another preferable embodiment of the first aspect, the tire is used in a wheel producing a traction force as a main stress and the central main portion of the sub-groove is inclined from the surface side of the block toward the groove bottom in the direction of the traction force. That is, the central main portion of the sub-groove formed on the diagonal at a center of the block is inclined in the direction of the traction force.

This embodiment is restricted to be used in a driving wheel of the vehicle. Although the block portion near to the sub-groove is fallen down toward the sub-groove by the traction force in the conventional tire, according to the invention, the rigidity of such a block portion is enhanced by above construction of the sub-groove to suppress the falling-down of the block in the circumferential direction of the tread portion. As a result, a corner part of the block retaining by the falling-down through the traction force without contacting with ground and wearing is more uniformly worn together with the block portion, whereby the irregular wear can be more suppressed.

In the other preferable embodiment of the first aspect, the tire is used in a wheel producing a braking force as a main stress and the central main portion of the sub-groove is inclined from the surface side of the block toward the groove bottom in the direction of the braking force. That is, the central main portion of the sub-groove formed on the diagonal at a center of the block is inclined in the direction of the braking force.

This embodiment is restricted to be used in a non-driving wheel or an idle wheel of the vehicle. Even in this case, the effect of suppressing the irregular wear is obtained likewise the above case.

Moreover, when the aforementioned pneumatic tires are mounted on front and rear wheels of the vehicle in accordance with the use purpose of the tire, the above effects are more surely developed.

In a further preferable embodiment of the first aspect, the block is shaped into substantially a rhombic form and the central main portion of the sub-groove is arranged so as to extend along a short diagonal of the block. That is, even when the block is shaped in the rhombic form having four equal sides among the parallelograms, the same results as mentioned above is obtained.

In a still further preferable embodiment of the first aspect, the central main portion of the sub-groove has an inclination angle of 5-45° with respect to a vertical line drawn to the surface of the block. When the inclination angle is less than 5°, the rigidity of the block in the vicinity of the sub-groove is not sufficiently increased and hence the irregular wear can not be suppressed, while when the inclination angle exceeds 45°, the life of the mold for the vulcanization of the tire becomes short and it is difficult to manufacture the pneumatic tire.

According to a second aspect of the invention, there is the provision of in a pneumatic tire comprising a plurality of block rows each containing a plurality of blocks and being used for a steering wheel, the improvement wherein a central main portion of a sub-groove formed in each block of an outer block row when being mounted onto a vehicle is formed so as to incline in a direction of a side force and a central main portion of a sub-groove formed in each block of an inner block row when being mounted onto the vehicle is formed so as to incline in a direction of a braking force.

In the tire of the second aspect, the side force and the braking force are main stresses applied to the blocks from the road surface. Therefore, even when such a tire is used for the steering wheel, the wear resistance is improved in correspondence to the difference between the input directions of external forces at a state of maintaining the dry gripping and wet gripping properties equal to those of the conventional tire and hence the long tread life of the tire can be attained.

According to a third aspect of the invention, there is the provision of in a pneumatic tire comprising a tread portion having a plurality of blocks, each of which blocks being defined into substantially a quadrilateral form by two pairs of main grooves each having a different angle with respect to an equatorial plane of the tire and having a plurality of blocks, each of which blocks having at least one sub-groove crossing with the block, the improvement wherein at least a central main portion of the sub-groove is inclined substantially in the same direction as any one of diagonals of the block and is arranged at a position offset from the diagonal.

As the block having substantially the quadrilateral form defined by the two pairs of main grooves each having a different angle with respect to the equatorial plane, mention may be made of a parallelogram-like block, a rhombic-like block and the like.

As the sub-groove crossing with the block is arranged in the block or the sub-groove is opened to the main groove, the edge factor for cutting water film between the road surface and the block surface is increased and also water existing between the road surface and the block surface of the block is absorbed by the sub-groove to discharge toward the main groove, whereby the wet performances are improved.

Moreover, an end portion of the sub-groove connecting the central main portion thereof to the main groove is preferable to be opened to the main groove closest to the end of the central main portion. In this case, water existing between the central portion of the block and the road surface can be discharged to the main groove at a shortest distance.

In addition, it is favorable that the central main portion of the sub-groove is smoothly connected to the end portion thereof through a curved connecting portion, whereby water absorbed in the central main portion of the sub-groove is smoothly flown through the connecting portion and discharged to the main groove. Further, stress concentration in a joint between the central main portion and the end portion of the sub-groove can be suppressed by the curved connecting portion to improve the crack resistance. Furthermore, non-uniformity of the stress in the joint between the central main portion and the end portion of the sub-groove can be suppressed by the curved connecting portion to prevent the occurrence of heel-and-toe.

In the pneumatic tire of the third aspect, the central main portion of the sub-groove is inclined in the same direction as any one of diagonals of the block and is arranged at a position apart from the diagonal, so that the rigidity of the block in the vicinity of the sub-groove can be changed or the difference between the rigidity in one region and the rigidity in the other region bordering the sub-groove can be provided.

Therefore, by deciding the offset direction of the central main portion in correspondence to the difference of the input directions resulted from the tire mounting positions, the irregular wear generated on the block can be controlled. To be concrete, the central main portion of the sub-groove is offset to a outlet of input with respect to the input direction resulting in the irregular wear.

Thus, the rigidity of the small block segment in the outlet of input is made higher than that of the small block segment in an inlet of input, whereby the irregular wear resulted from the input can be controlled.

Moreover, the connection portion is preferable to be an arc having a radius of curvature of 3-10 mm (as measured on a center line of the sub-groove). When the radius of curvature is less than 3 mm, stress concentration in the vicinity of the connecting portion can not be eliminated and hence the crack is apt to be easily created. And also, the non-uniformity of stress in the vicinity of the connecting portion is generated and the heel-and-toe wear is easily generated. In addition, the flow resistance in the connecting portion is increased to lower the drainage property.

In a preferable embodiment of the third aspect, the central main portion is arranged so as to offset from the diagonal toward a side opposite to a forward rotating direction of the tire.

In the pneumatic tire to be mounted onto the driving wheel, the direction of input applied to the block of the tread portion in the traction is opposite to the forward rotating direction of the tire. Therefore, in case of attaching importance to the traction, the central main portion of the sub-groove is offset from the diagonal toward the side opposite to the forward rotating direction of the tire, whereby the rigidity of the small block segment in the inlet of input is made higher in the traction. Thus, the irregular wear resulted from the traction can be suppressed to control the lowering of the wet performances due to the decrease of the groove width (groove closure) of the sub-groove in the traction.

In another preferable embodiment of the third aspect, the central main portion of the sub-groove is arranged so as to offset from the diagonal toward a forward rotating direction of the tire.

The direction of input applied to the block is the same as the forward rotating direction of the tire in the braking. In case of attaching importance to the braking, the central main portion of the sub-groove is offset from the diagonal toward the forward rotating direction of the tire, whereby the rigidity of the small block segment in the inlet of input is made higher in the braking. Thus, the irregular wear resulted from the braking can be suppressed to control the lowering of the wet performances due to the decrease of the groove width (groove closure) of the sub-groove in the braking.

In the other preferable embodiment of the third aspect, the central main portion of the sub-groove in the block located in an outer region of the tread in a widthwise direction of a vehicle mounted with the tire is arranged so as to offset inward from the diagonal in the widthwise direction of the vehicle and the central main portion of the sub-groove in the block located in an inner region of the tread in the widthwise direction of the vehicle mounted with the tire is arranged so as to offset from the diagonal toward the forward rotating direction of the tire.

For example, the front wheel of the passenger car is a steering wheel (an idle wheel in case of the rear drive vehicle). In the braking, the load applied to the front wheel becomes larger, while in the cornering, the input from the widthwise direction of the tire increases. Particularly, a large input from the outside of the vehicle toward the inside thereof is applied to a widthwise outer region of the tread in the tire to be arranged at an outer side of the vehicle in the cornering radius direction.

In general, the vehicle is set to a negative camber, so that an upper side of the tire inclines toward the inside of the vehicle viewing the tire from the front side of the vehicle. To this end, the load applied to the tire is larger in the widthwise inner region of the tread than in the widthwise outer region of the tread. The braking is frequent in the straight running and less in the cornering, so that a ratio of input through the braking is larger in the widthwise inner region of the tread than in the widthwise outer region thereof. And also, the direction of input in the braking is the same as the forward rotating direction of the tire.

Considering both the input in the braking and the input in the cornering, therefore, it is effective to use the tire having the above offset arrangements of the central main portions of the sub-grooves in the front wheel of the vehicle.

In a further preferable embodiment of the third aspect, the tire is mounted onto a vehicle at a left side thereof and the sub-groove is arranged at a position offset from the diagonal toward a right side in the widthwise direction of the vehicle. This copes with a case that when the vehicle is turned in the right direction, the input from the left side in the widthwise direction of the tire is increased and particularly a large input toward the right side from the left side is applied to the pneumatic tire arranged at the left side of the vehicle.

In a still further preferable embodiment of the third aspect, the tire is mounted onto a vehicle at a right side thereof and the sub-groove is arranged at a position offset from the diagonal toward a left side in the widthwise direction of the vehicle. This copes with a case that when the vehicle is turned in the left direction, the input from the right side in the widthwise direction of the tire is increased and particularly a large input toward the left side from the right side is applied to the pneumatic tire arranged at the right side of the vehicle.

In a yet further preferable embodiment of the third aspect, the block is substantially a parallelogram form and the central main portion of the sub-groove is arranged substantially in parallel to a short diagonal of the block (an angle with respect to the diagonal means within ±20°). In this case, the lowering of the rigidity of the block can be suppressed as compared with a case of arranging the central main portion substantially in parallel to the long diagonal.

Moreover, when the aforementioned pneumatic tires are mounted on front and rear wheels of a passenger car of rear-wheel drive system in accordance with the use purpose of the tire, the above effects are more surely developed.

In a further preferable embodiment of the third aspect, the central main portion of the sub-groove is formed so that the groove bottom is inclined from the surface side of the block in a direction of a main stress applied from a road surface to the block. Thus, the occurrence of the irregular wear can be more suppressed.

### BRIEF DESCRIPTION OF THE DRAWINGS

The invention will be described with reference to the accompanying drawings, wherein:
FIG. 1 is a diagrammatically developed view of a tread in a front tire of an embodiment according to the invention;
FIG. 2 is a diagrammatically section view taken along a line II-II of FIG. 1;
FIG. 3 is a diagrammatically section view taken along a line III-III of FIG. 1;
FIG. 4 is a diagrammatically section view taken along a line IV-IV of FIG. 1;
FIG. 5 is a diagrammatically developed view of a tread in a rear tire of another embodiment according to the invention;
FIG. 6 is a diagrammatically section view taken along a line VI-VI of FIG. 5;
FIG. 7 is a diagrammatically section view taken along a line VII-VII of FIG. 5;
FIG. 8 is a schematic view illustrating a wearing quantity of a block in the conventional tire;
FIG. 9 is a schematic view illustrating a wearing quantity of a block in a tire according to the invention;
FIG. 10 is a diagrammatically developed view of a tread in the other embodiment of the pneumatic tire according to the invention (for right front wheel);
FIG. 11A is a schematic enlarged view of a block located at the inner side when the tire of FIG. 10 is mounted onto a vehicle;
FIG. 11B is a schematic enlarged view of a block located at the outer side when the tire of FIG. 10 is mounted onto a vehicle;
FIG. 12 is a diagrammatically developed view of a tread in further embodiment of the pneumatic tire according to the invention (for right rear wheel);
FIG. 13A is a schematic enlarged view of a block located at the inner side when the tire of FIG. 12 is mounted onto a vehicle;
FIG. 13B is a schematic enlarged view of a block located at the outer side when the tire of FIG. 12 is mounted onto a vehicle;
FIG. 14 is a diagrammatically developed view of a tread in a pneumatic tire for right front wheel as a comparative example;
FIG. 15 is a diagrammatically developed view of a tread in a pneumatic tire for right rear wheel as another comparative example;
FIG. 16A is a schematically plan view of a conventional block;
FIG. 16B is a schematically plan view of another conventional block;
FIG. 17A is a plan view of a block showing a relationship between input and position of irregular wear; and
FIG. 17B is a diagrammatically section view of a block deformed by input.

### DETAILED DESCRIPTION OF THE INVENTION

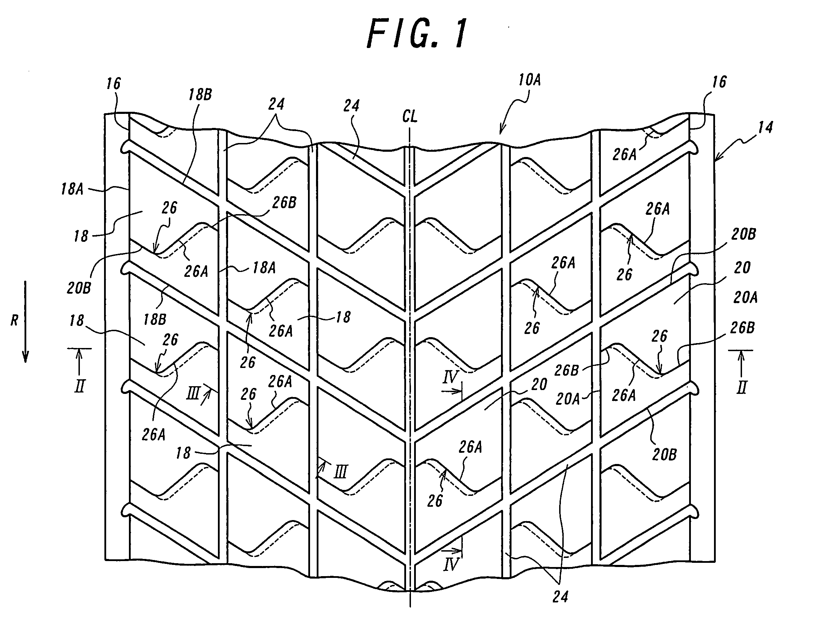

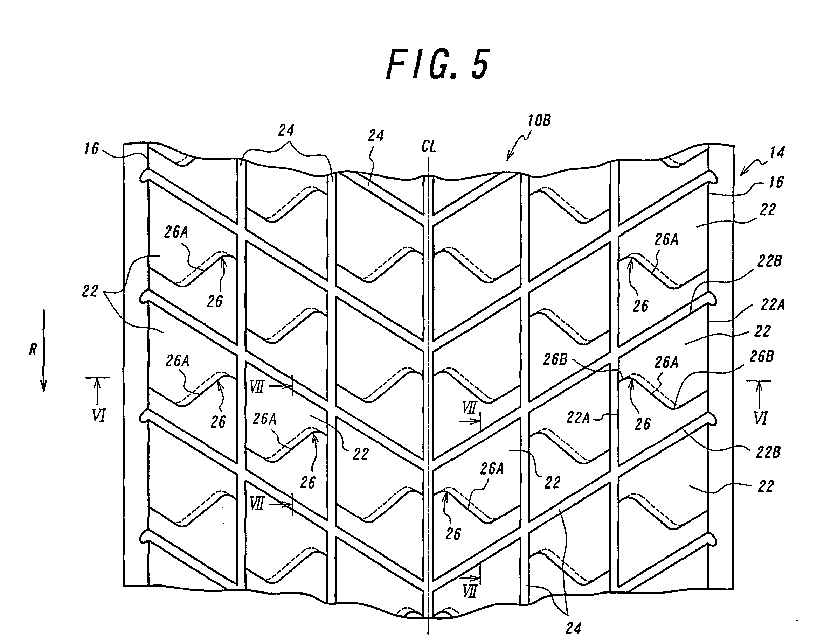

In FIGS. 1 and 5 are shown typical tread patterns of pneumatic tires 10A and 10B as an embodiment of the invention, respectively.

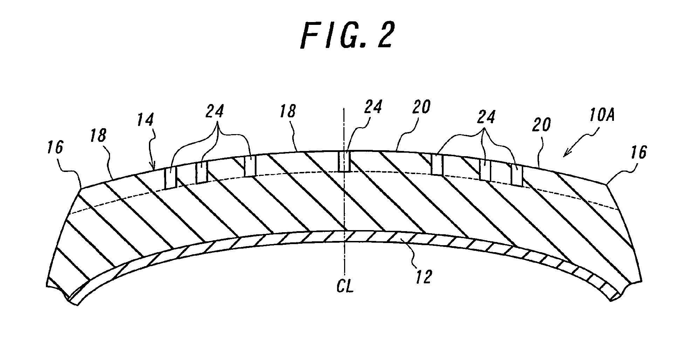

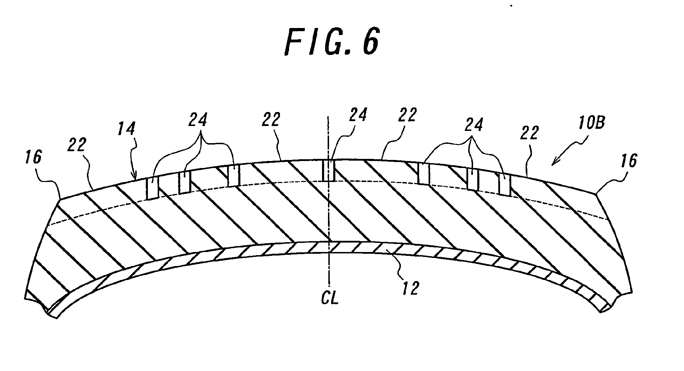

As shown in FIGS. 2 and 6, the internal constructions of the pneumatic tires 10A, 10B are the same as in this type of the conventional pneumatic tire combining a radial carcass 12, a high-rigidity belt (not shown) arranged so as to cover a crown portion of the carcass 12, and a tread 14 arranged on an outer peripheral surface of the belt and made of a tread rubber. Moreover, the description of such a construction will be omitted in embodiments as mentioned later.

Moreover, as shown in FIGS. 1, 2, 5 and 6, the outer skin of the pneumatic tire 10A, 10B contacting with ground is constituted with the tread 14 shaped into an arc form or a crown form. On both end portions of the tread 14 are formed shoulder portions 16, respectively.

Among these figures, FIG. 1 shows a pneumatic front tire 10A located at a steering wheel side of a vehicle.

As shown in FIG. 1, when the tire 10A is mounted onto a vehicle, it has an outer tread pattern arranged at a left side of a center line CL being an equatorial plane of the tread 14 and an inner tread pattern arranged at a right side of the center line CL.

In the outer tread pattern of the tire 10A are arranged many outer blocks 18 each defined in a parallelogram form by a pair of widthwise sides 18A each extending in a circumferential direction of the tread and a pair of slant sides 18B each being inclined with respect to a forward rotating direction R of the tire and extending from the shoulder portion 16 toward the center line CL and from a left upward side to a right downward side in FIG. 1. In the illustrated embodiment, these outer blocks 18 are arranged at equal intervals over the circumference of the tread 14 and three block rows each containing the outer blocks 18 are formed side by side in the widthwise direction of the tire.

In the inner tread pattern of the tire 10A are arranged many inner blocks 20 each defined in a parallelogram form by a pair of widthwise sides 20A each extending in a circumferential direction of the tread and a pair of slant sides 20B each being inclined with respect to the forward rotating direction R of the tire and extending from the shoulder portion 16 toward the center line CL and from a right upward side to a left downward side in FIG. 1. In the illustrated embodiment, these inner blocks 20 are arranged at equal intervals over the circumference of the tread 14 and three block rows each containing the inner blocks 20 are formed side by side in the widthwise direction of the tire.

And also, main grooves 24 are formed between the outer blocks 18, between the inner blocks 20, and between the outer block 18 and the inner block 20, respectively. Therefore, the tread pattern of the front tire 10A has a construction combining the outer blocks 18 with the inner blocks 20. Moreover, each of the outer block 18 and the inner block 20 is provided with a sub-groove 26 such as a sipe, fine groove or the like. A central main portion 26A of the sub-groove 26 arranged in each of the outer block 18 and the inner block 20 is formed so as to extend along a diagonal of the block 18, 20 and incline with respect to the equatorial plane CL.

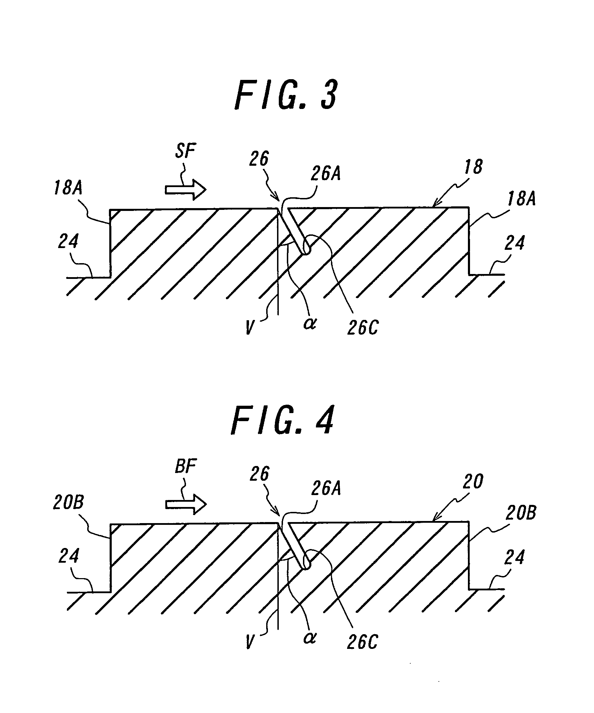

In the outer block 18 shown in FIG. 3, the central main portion 26A of the sub-groove 26 is arranged such that a groove bottom 26C of the sub-groove 26 is inclined inward from an outer surface of the block in a widthwise direction of the tire and toward a direction of side force SF as a main stress applied from a road surface to the outer block 18.

On the other hand, in the inner block 20 shown in FIG. 4, the central main portion 26A of the sub-groove 26 is arranged such that a groove bottom 26C of the sub-groove 26 is inclined from the outer surface of the block toward a direction of braking force BF as a main stress applied from the road surface to the inner block 20 and along a forward rotating direction R of the tire.

Moreover, an inclination angle α of the central main portion 26A of the sub-groove 26 as shown in FIGS. 3 and 4 with respect to a vertical line V drawn from the outer surface of the block is preferable to be within a range of 5-45°, more preferably 15-25°.

In FIG. 5 is shown a pneumatic rear tire 10B mounted onto a driving wheel side of a vehicle.

As shown in FIG. 5, the tire 10B has a symmetrical tread pattern with respect to the center line CL of the tread 14.

That is, in both side regions of the tire 10B with respect to the center line CL are arranged many blocks 22 each defined in a parallelogram form by a pair of widthwise sides 22A each extending in a circumferential direction of the tread and a pair of slant sides 22B each being inclined with respect to the forward rotating direction R of the tire and extending from the shoulder portion 16 toward the center line CL. In the illustrated embodiment, these blocks 22 are arranged at equal intervals over the circumference of the tread 14 and three block rows each containing the blocks 22 are formed side by side in the widthwise direction of the tire at both sides with respect to the center line CL.

And also, main grooves 24 are formed between the blocks 22. The tread pattern of the tire 10B in the illustrated embodiment has a construction combining the blocks 22.

Moreover, each of the blocks 22 is provided with a sub-groove 26 such as a sipe, a fine groove or the like. A central main portion 26A of the sub-groove 26 arranged in the block 22 is formed so as to extend along a diagonal of the block 22 and incline with respect to the equatorial plane CL.

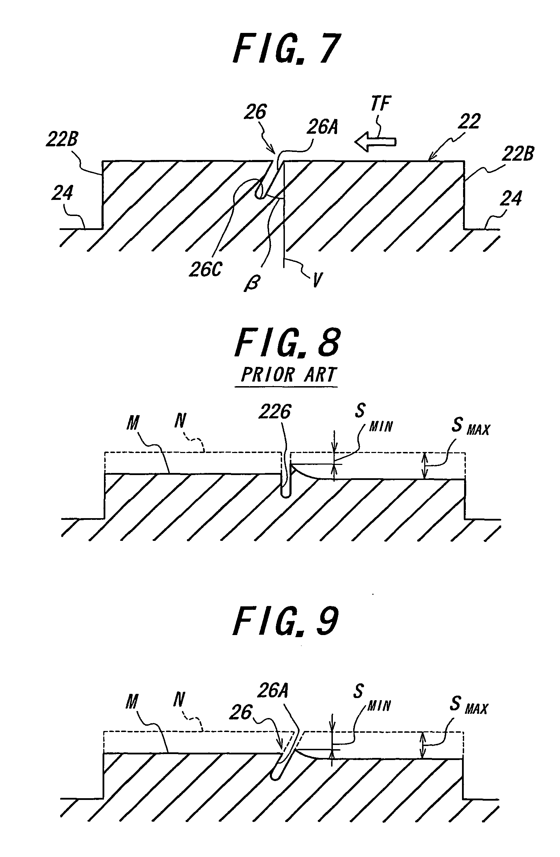

In the block 22 shown in FIG. 7, the central main portion 26A of the sub-groove 26 is arranged such that a groove bottom 26C of the sub-groove 26 is inclined from the outer surface of the block toward a direction of traction force TF as a main stress applied from the road surface to the block 22. And also, an inclination angle β of central main portion 26A of the sub-groove 26 as shown in FIG. 7 with respect to a vertical line V drawn from the outer surface of the block is preferable to be within a range of 5-45°, more preferably 15-25°.

Moreover, as shown in FIGS. 1 and 5, both end portions 26B of the sub-groove 26 formed on each of the blocks 18, 20, 22 of the pneumatic tires 10A, 10B extend in parallel to the slant side 18B, 20B, 22B of the block and reach to the widthwise side 18A, 20A, 22A of the block.

The action of the pneumatic tire 10A, 10B according to the invention will be explained below.

Each of the tire 10A, 10B has a block type tread pattern in which the blocks 18, 20, 22 each having substantially a quadrilateral form are arranged in the tread 14 and provided with one sub-groove 26 slantly formed with respect to the equatorial plane therein.

The central main portion 26A of the sub-groove 26 is formed so as to extend along the diagonal of each block 18, 20, 22 and so as to incline the groove bottom 26C in the central main portion of the sub-groove from the outer surface of the block 18, 20, 22 in a direction of main stress applied to the block 18, 20, 22.

For example, in the outer block 18 of the front tire 10A, the central main portion 26A of the sub-groove 26 is slantly arranged toward the direction of the side force SF shown in FIG. 3 as a main stress, while in the inner block 20 of the front tire 10A, the central main portion 26A of the sub-groove 26 is slantly arranged toward the direction of the braking force BF shown in FIG. 4 as a main stress. In the rear tire 10B, the central main portion 26A of the sub-groove 26 is slantly arranged toward the direction of the traction force TF shown in FIG. 7 as a main stress.

In a super-high performance passenger car making no tire rotation, there is a tendency that the irregular wear is created by growing wear in only a specific direction decided every the tire mounting position. However, when the above tires 10A, 10B are applied to the above passenger car, the irregular wear is suppressed by changing the rigidity of the block 18, 20, 22 in the vicinity of the sub-groove 26 because the central main portion 26A of the sub-groove 26 is formed so as to extend along the diagonal of the block 18, 20, 22 having substantially a quadrilateral form and also the central main portion 26A of the sub-groove 26 is slantly arranged toward the groove bottom 26C in the direction of the main stress applied from the road surface to the block.

That is, since the irregular wear is considered to result from the falling-down of the block in the vicinity of the sub-groove, when the central main portion of the sub-groove is inclined in the direction of the main stress applied from the road surface to the block, the rigidity of a portion of the block in the vicinity of the sub-groove that falls down toward the sub-groove by the external force is increased, and hence the falling-down of the block is suppressed and it is possible to suppress the occurrence of the irregular wear.

In the tires 10A, 10b according to the invention, the arranging position and groove volume of the sub-groove 26 are the same as those of the conventional tire, so that the wear resistance is enhanced in correspondence to the difference of the input direction between the external forces generated by the difference of the tire mounting positions at a state of maintaining the dry gripping and wet gripping properties equal to those of the conventional tire and hence the long tread life of the tire can be attained.

Moreover, the inclination angle α, β of the central main portion 26A of the sub-groove 26 in these tires is set to a range of 5-45°. When the inclination angle α, β is less than 5°, the rigidity of the block in the vicinity of the sub-groove is not sufficiently enhanced and the irregular wear can not be suppressed, while when it exceeds 45°, the life of the mold for the vulcanization of the tire is shortened and it is difficult to manufacture the pneumatic tire.

Concretely, when the rear tire 10B is mounted onto a driving wheel of a vehicle applied with the traction force TF as a main stress, the central main portion 26A of the sub-groove 26 arranged at a center of the block along the diagonal thereof is arranged so as to incline the side of the groove bottom 26C from the outer surface of the block 22 in the direction of the traction force TF, so that the rigidity of the block 22, which has fallen down toward the sub-groove 26 by the traction force TF in the conventional tire, is increased to suppress the falling-down of the block in the circumferential direction of the tread 14. As a result, the corner part of the block 22 in the vicinity of the sub-groove retaining without contacting with ground and without wearing due to the falling down through the traction force TF is uniformly worn together with the surroundings thereof, whereby the irregular wear can be more suppressed.

And also, when the front tire 10A is mounted onto a steering wheel of a vehicle, the central main portion 26A of the sub-groove 26 arranged on each of the outer blocks 18 in the outer block row is inclined in the direction of the side force SF, while the central main portion 26A of the sub-groove 26 arranged on each of the inner blocks 20 in the inner block row is inclined in the direction of the braking force BF, and also the central main portion 26A of the sub-groove 26 arranged at a center of the block 18, 20 along the diagonal thereof is formed so as to incline the groove bottom 26C of the sub-groove 26 from the outer surface of the block in the directions of the side force SF and the braking force BF, whereby the effect suppressing the irregular wear is obtained.

In the above embodiments, the block is a parallelogram. Moreover, the block may be shaped into a rhombic form in which lengths of four sides are equal to each other among the parallelograms wherein the central main portion of the sub-groove may be arranged so as to extend along the short diagonal of the block. That is, even when the block is shaped into substantially the rhombic form, the wear resistance can be enhanced in correspondence to the difference of the input directions of the external forces generated by the difference of the tire mounting position to attain the long tread life of the tire likewise the above embodiments.

Moreover, although the number of the sub-groove is one every the block in the above embodiments, two or more sub-grooves may be formed in each block.

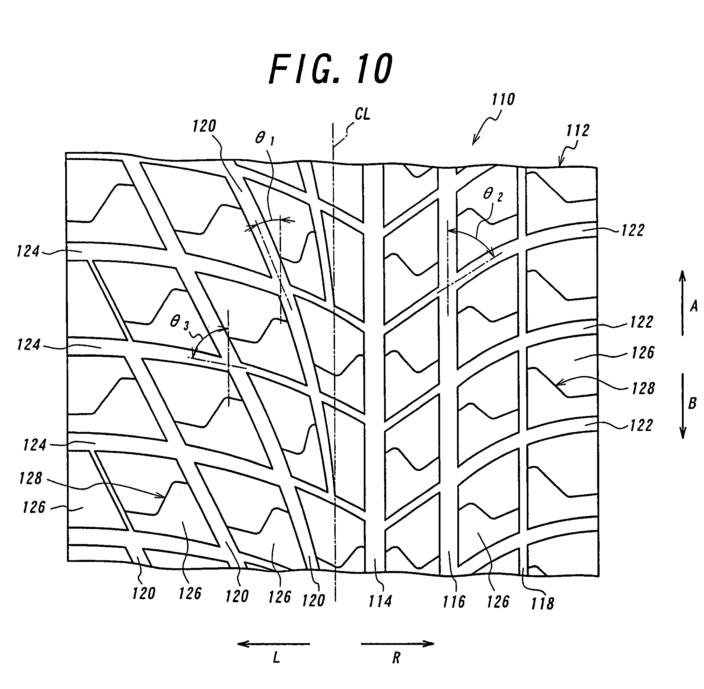

Another embodiment of the pneumatic tire according to the invention will be explained with reference to FIGS. 10, 11 and 17.

As shown in FIG. 10, a pneumatic tire 110 in this embodiment has a directional pattern and a tire size of 215/45R17 and is used in a right front wheel and rotated in a direction shown by an arrow B during the running.

Moreover, a pattern of a pneumatic tire used in a left front wheel is symmetrical to the pattern of FIG. 10.

As shown in FIG. 10, main grooves 114, 116 and 118 each extending along a circumferential direction of the tire (directions of an arrow A and an arrow B) are formed at a right side with respect to the equatorial plane CL of the tire (the side in an arrow direction R) in a tread 112 of the pneumatic tire 110, while main grooves 120 inclining at an angle of no more than 30° with respect to the circumferential direction of the tire are formed at a left side (the side in an arrow direction L ) with respect to the equatorial plane CL.

In the illustrated embodiment, an inclination angle θ₁ of the main groove 120 with respect to the circumferential direction of the tire (measured at an acute angle side. Moreover, when the center line of the groove is a curved line, the angle θ₁ means an angle with respect to a tangent of the center line of the groove.) is set so as to become larger in a left shoulder than in the center. That is, the main groove 120 is inclined at an angle of approximately 5° with respect to the equatorial plane of the tire in the center and inclined at an angle of approximately 28° with respect to a plane in parallel to the of the equatorial plane of the tire in the shoulder.

Moreover, a plurality of main grooves 122 crossing with the main grooves 114, 116 and 118 are formed at the right side of the tread 112 with respect to the equatorial plane CL of the tire, while a plurality of main grooves 124 crossing with the main groove 120 are formed at the left side of the tread 112 with respect to the equatorial plane CL of the tire.

In the illustrated embodiment, an angle θ₂ of the main groove 122 with respect to the circumferential direction of the tire (measured at an acute angle side in the center line of the groove. Moreover, when the center line of the groove is a curved line, the angle θ₂ means an angle with respect to a tangent of the center line of the groove.) is set so as to become larger in a right shoulder than in the center. Moreover, the main groove 120 is inclined at an angle of approximately 60° with respect to the equatorial plane of the tire in the center and inclined at an angle of approximately 78° with respect to the plane in parallel to the of the equatorial plane of the tire in the shoulder.

On the other hand, an angle θ₃ of the main groove 124 with respect to the circumferential direction of the tire (measured at an acute angle side in the center line of the groove. Moreover, when the center line of the groove is a curved line, the angle θ₃ means an angle with respect to a tangent of the center line of the groove.) is set so as to become larger in the left shoulder than in the center. In this case, the main groove 124 is inclined at an angle of approximately 60° with respect to the equatorial plane of the tire in the center and inclined at an angle of approximately 88° with respect to the plane in parallel to the of the equatorial plane of the tire in the shoulder.

In the illustrated embodiment, the main grooves 114, 116, 118, 120, 122 and 124 have the same groove depth.

The tread 112 has a plurality of blocks 126 each having a quadrilateral form defined by these main grooves 114, 116, 118, 120, 122 and 124.

Each of the blocks 126 has a quadrilateral form having different lengths of two diagonals.

A sub-groove 128 is formed in each of the greater part of blocks 126. Moreover, the definition of the sub-groove 128 differs between the outer block 126 and the inner block 126 bordering the main groove 114 when the tire of the illustrated embodiment is mounted onto a vehicle.

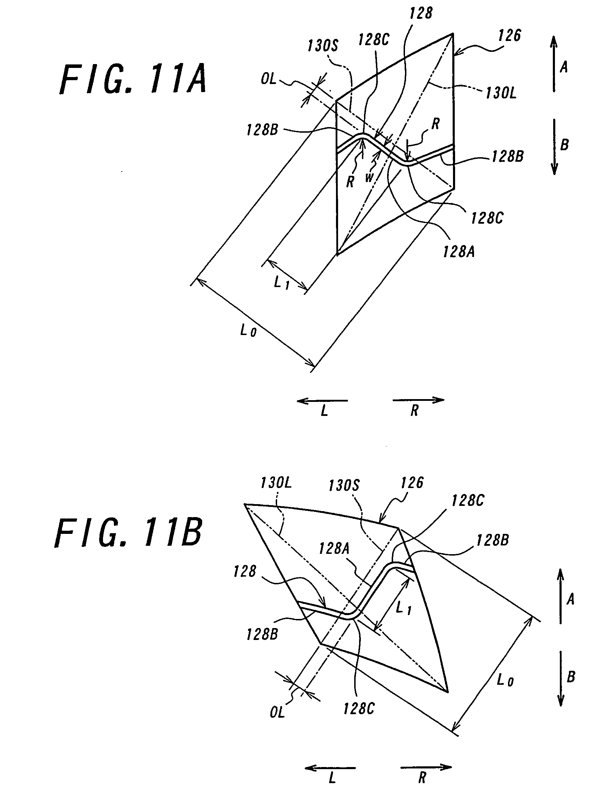

Firstly, the inner block 126 located toward the inside of the vehicle (a third block 126 from the right side) will be explained with reference to FIG. 11A. Moreover, the same definition is also adopted for the sub-groove 128 in the other remaining inner blocks 126.

As shown in FIG. 11A, the sub-groove 128 comprises a central main portion 128A arranged at a central portion of the block 126, an end portion 128B extending from an end of the central main groove 128A and opening toward the main groove closest thereto, and an arc-shaped connecting portion 128C connecting the central main portion 128A to the end portion 128B.

In order to reduce the flow resistance of water, a radius of curvature of the connecting portion 128C is preferable to be 3-10 mm.

The central main portion 128A of the sub-groove 128 is formed at a position apart from a short diagonal 130S shown by a phantom line toward a side of a forward rotating direction of the tire (the side in the arrow direction B).

The central main portion 128A is preferable to be formed substantially in parallel to the short diagonal 130S. Moreover, the central main portion 128A may be inclined with respect to the short diagonal 130S. In this case, an inclination angle of the central main portion 128A with respect to the short diagonal 130S is preferable to be within a range of ±20°.

In the illustrated embodiment, the central main portion 128A is arranged in parallel to the short diagonal 130S.

Moreover, the central main portion 128A is arranged so as to offset from the short diagonal 130S. In this case, the offset quantity OL is preferable to be no more than 50% of a length of a long diagonal 130L.

And also, the central main portion 128A is preferable to have a depth corresponding to no less than 30% of a depth in the main grooves 114, 116, 118, 120, 122, 124.

The sub-groove 128 is preferable to have a groove width w of no more than 2 mm in order to control the lowering of the rigidity of the block 126. (Moreover, in order to ensure the drainage property, the sub-groove is required to have the groove width w so as not to close even if the portion of the block 126 in the vicinity of the sub-groove is fallen down by the input.)

Furthermore, a length L₁ of the central main portion 128A of the sub-groove (a distance between intersect points of elongation of the central main portion 128A with elongation of the end portion 128B) is preferable to be set to a range from no less than 30% to less than 70% of a length L₀ of the short diagonal 130S.

Next, the outer block 126 located toward the outside of the vehicle (a second block 126 viewed from the side of the equatorial plane CL among the blocks 126 defined by the two main grooves 120 and the two main grooves 124) will be explained with reference to FIG. 11B. Moreover, the same definition is also adopted for the sub-groove 128 in the other remaining outer blocks 126.

As shown in FIG. 11B, the sub-groove 128 located toward the outside of the vehicle also comprises a central main portion 128A, an end portion 128B and a connecting portion 128C likewise the sub-groove 128 in the inner block 126 as mentioned above.

The difference between the sub-groove 128 in the outer block 126 and the sub-groove in the inner block 126 is a point that the central main portion 128A is arranged so as to offset inward from the short diagonal 130S when the tire is mounted onto the vehicle. Moreover, the definitions other than the arranging position of the central main portion 128A are the same therebetween.

In the illustrated embodiment, each of the main grooves 114, 116, 118, 120, 122 and 124 has a depth of 6 mm, and the central main portion 128A has a depth of 2 mm and a length L₁ corresponding to approximately 47% of the length L₀ of the short diagonal 130S, and the end portion 28B has a depth of 2 mm.

And also, the offset quantity OL of the central main portion 128A is set to 10 % of a length of the long diagonal 130L.

The action of the pneumatic tire according to the invention as shown in FIG. 10 will be explained below.

(1) Since the sub-groove 128 is arranged across the block 126, the wet performances are improved by the increase of the edge factor through the sub-groove 128 and the water absorbing and discharging action of the sub-groove 128. Moreover, water absorbed in the sub-groove is discharged to the main groove through the end portion 128B.

And also, since the connecting portion 128C is rendered into the arc shape, the absorbed water can efficiently be discharged to the main groove. When the radius of curvature of the connecting portion 128C is less than 3 mm, the stress concentration in the vicinity of the connecting portion 128C can not be removed and hence cracks are apt to be easily created. Furthermore, the non-uniformity of the stress in the vicinity of the connecting portion 128C is caused to easily create the heel-and-toe wear. In addition, the flow resistance at the connecting portion 128C is increased to lower the drainage property.

When the inclination angle of the central main portion 128A with respect to the short diagonal 130S deviates from a range of ±20°, the rigidity of the block 126 lowers.

(2) When the block 126 contacts with ground, the ground contact pressure is apt to easily concentrate in the central portion of the block 126. However, the central main portion 128A is formed substantially in the central portion of the block 126, so that the ground contact pressure is dispersed into both sides of the sub-groove 128, whereby the high ground contact pressure at the central portion of the block 126 can be mitigated.

(3) Since the depth of the central main portion 128A is approximately 33% of the depth of each of the main grooves 114, 116, 118, 120, 122 and 124 (the depth of the central main groove 28A is 2 mm and the depth of the main groove is 6 mm), the drainage property of the block 126 can be ensured.

(4) Since the length L₁ of the central main portion 128A is set to 47% of the length L₀ of the short diagonal 130S, the wet performances and the dry performances can simultaneously be established. Moreover, when the length L₁ of the central main portion 128A is no less than 70% of the length L₀ of the short diagonal 130S, the rigidity of the block 126 lowers and the dry performances lower.

(5) Since the depth of the end portion 128B is set to be equal to that of the central main portion 128A and to be approximately 33% of the depth of the main groove, the rigidity of the outer peripheral edge portion of the block 126 can be ensured as a whole, and hence the rigidity of the block 126 is ensured to maintain the dry performances. On the other hand, when the depth of the end portion 128B exceeds 90% of the depth of the main groove, the rigidity of the block 126 is lowered to easily cause the bending deformation and the dry performances are lowered, while when the depth of the end portion 128B is less than 10% of the depth of the main groove, the water-absorptivity is lowered, so that the drainage property worsens.

(6) Since the central main groove 128A is arranged substantially in parallel to the short diagonal 130S, the lowering of the rigidity of the block 126 can favorably be suppressed as compared with the case of arranging it substantially in parallel to the long diagonal 130L.

(7) The load applied to the front wheel becomes larger in the braking, and the input from the widthwise direction of the tire is increased in the cornering. Especially, a large input directing from the outside of the vehicle toward the inside thereof is applied to the widthwise outside region of the tread in the tire to be arranged at the outer side of the vehicle in the cornering radius direction. In general, the vehicle is set to a negative camber, so that an upper side of the tire inclines toward the inside of the vehicle viewing the tire from the front side of the vehicle. To this end, the load applied to the tire is larger in the widthwise inner region of the tread 112 than in the widthwise outer region thereof. The braking is frequent in the straight running and less in the cornering, so that a ratio of input through the braking is larger in the widthwise inner region of the tread than in the widthwise outer region thereof. And also, the direction of input in the braking is the same as the forward rotating direction of the tire.

When the pneumatic tire 110 is used in a front wheel of a vehicle having a negative camber, the above input in the forward rotating direction of the tire becomes much in the blocks 126 arranged at the inside with respect to the main groove 114 in the widthwise direction of the vehicle. Such a block 126 is divided into two small block segments by forming the sub-groove 128 in the block 126, and the central main portion 128A of the sub-groove 128 is arranged so as to offset from the diagonal 130S toward the forward rotating direction of the tire in the inner region of the tread 112 in the widthwise direction of the vehicle, so that the rigidity of the small block segment at the backward rotating direction of the tire is high and the rigidity of the small block segment at the forward rotating direction of the tire becomes relatively low.

In the braking, the input is applied to the blocks 126 at the inner region of the tread 112 in the widthwise direction of the vehicle from the side of the backward rotating direction of the tire or from the side of the small block segment having a high rigidity, so that the lowering of the wet performances due to the decrease of the groove width (the closure of the groove) of the sub-groove 128 in the braking is suppressed and also the irregular wear of the block 126 arranged at the inner region in the widthwise direction of the vehicle resulted from the braking is suppressed.

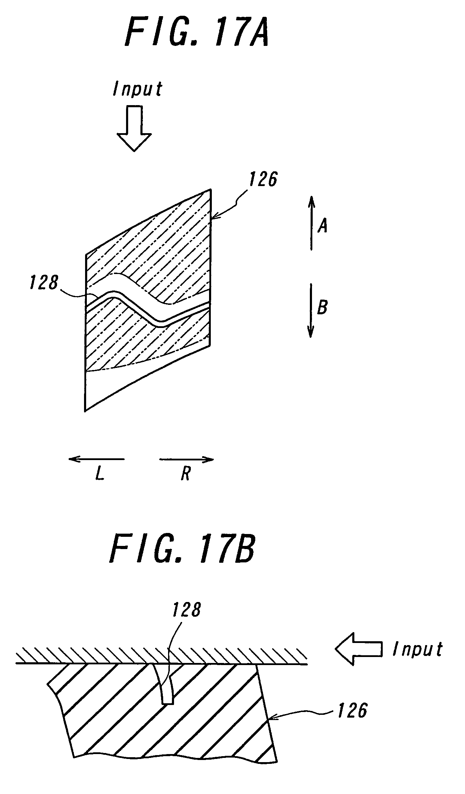

Moreover, the term "irregular wear" used herein concretely means a phenomenon as mentioned below. That is, as shown in FIG. 17B, when the block 126 is deformed by the input, a part of the block contacting with road surface is raised from the road surface and hence the portion of the block contacting with the road surface is worn more than the raised portion thereof (as a result, the irregular wear occurs). When the block 126 at such a ground contact state is shown as a plan view in FIG. 17A, the hatched portion corresponds to a more worn portion.

On the other hand, the input from the widthwise direction of the tire increases in the cornering. Particularly, the large input directing from the outside of the vehicle toward the inside thereof is applied to the outer region of the tread 112 in the widthwise direction of the vehicle in the pneumatic tire 110 mounted onto the front wheel and arranged at the outer side of the vehicle in the direction of the cornering radius direction.

In the outer region of the tread 112 in the widthwise direction of the vehicle, the central main portion 128A of the sub-groove 128 is arranged so as to offset inward from the diagonal 130S, so that the rigidity of the small block segment at the outside in the mounting onto the vehicle is high and the rigidity of the small block segment at the inside in the mounting onto the vehicle becomes relatively low.

In the cornering, the input is applied to the blocks 126 located at the outer region of the tread 112 in the widthwise direction of the vehicle from the outside of the vehicle, so that the lowering of the wet performances due to the decrease of the groove width (the closure of the groove) of the sub-groove 128 is suppressed and also the irregular wear of the block 126 arranged at the outer region in the widthwise direction of the vehicle resulted from the cornering is suppressed.

In the pneumatic tire 110 for the front wheel according to the invention, therefore, the irregular wear of all blocks 126 in the tread 112 is suppressed and the lowering of the wet performances is controlled. Therefore, it is optimum to use the above tire in the high-performance vehicle and the like subjected to a relatively large input.

Although the both end portions 128B are opened to the main grooves extending in the circumferential direction of the tire, either one or both of them may be opened to the main grooves extending in the axial direction of the tire.

Moreover, when the block 126 is divided into two small block segments by the sub-groove 128 comprising the central main portion 128A, the two end portions 128B and two connecting portions 128C, as shown in the illustrated embodiment, it is preferable to symmetrically arrange the pair of end portions 128B with respect to a point.

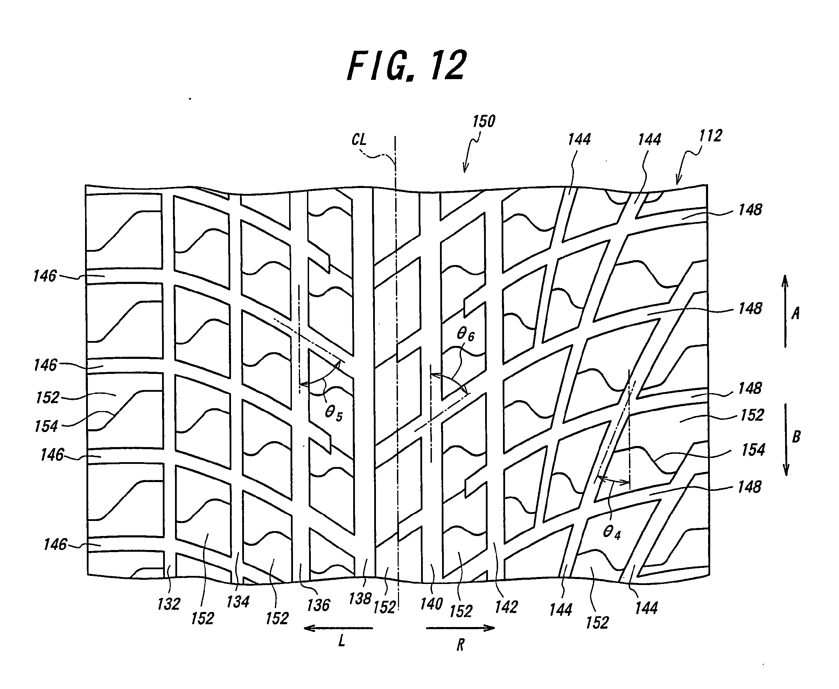

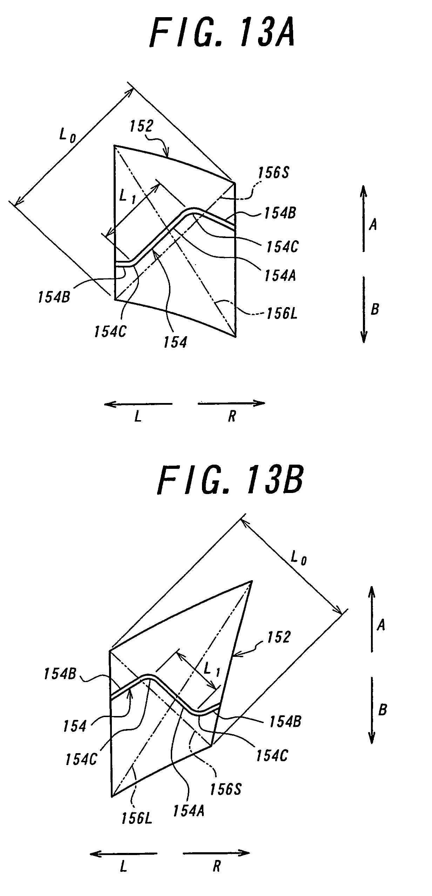

The other embodiment of the pneumatic tire according to the invention will be explained with reference to FIGS. 12 and 13.

A pneumatic tire 150 of this embodiment is a tire for a right rear wheel used together with the pneumatic tire 110 (for the front wheel) of FIG. 10. Moreover, the pattern of the pneumatic tire used for the left rear wheel is symmetrical to the pattern of FIG. 12.

In the tire of FIG. 12, the same construction as in the tire of FIG. 10 is represented by the same numeral and the explanation thereof is omitted. Moreover, the pneumatic tire 150 has a tire size of 245/45R 17.

As shown in FIG. 12, main grooves 132, 134, 136, 138, 140 and 142 are formed so as to extend along the circumferential direction of the tire (the directions of the arrows A and B) in the tread 112 of the pneumatic tire 150, while a plurality of main grooves 144 are formed so as to incline at an angle of no more than 40° with respect to the circumferential direction of the tire in the tread 112.

In the illustrated embodiment, the inclination angle θ₄ of the main groove 144 with respect to the circumferential direction of the tire (measured at an acute angle side. Moreover, when the center line of the groove is a curved line, the angle θ₄ means an angle with respect to a tangent of the center line of the groove.) is set so as to become larger in a right shoulder than in the center. That is, the main groove 144 is inclined at an angle of approximately 5° with respect to the equatorial plane of the tire in the center and inclined at an angle of approximately 32° with respect to the plane in parallel to the of the equatorial plane of the tire in the shoulder.

Furthermore, a plurality of main grooves 146 are formed so as to extend from the left shoulder side to the main groove 138 and cross with the main grooves 132, 134 and 136 at the left-side region of the tread 112, while a plurality of main grooves 148 are formed so as to extend from the right shoulder side to the main groove 138 and cross with the main grooves 140 and 142 at the right-side region of the tread 112.

In the illustrated embodiment, the inclination angle θ₅ of the main groove 146 with respect to the circumferential direction of the tire (measured at an acute angle side. Moreover, when the center line of the groove is a curved line, the angle θ₅ means an angle with respect to a tangent of the center line of the groove) is set so as to become larger in the left shoulder, and the main groove 146 inclines at the angle of approximately 55° with respect to the equatorial plane of the tire in the center and inclined at an angle of approximately 90° with respect to the plane in parallel to the of the equatorial plane of the tire in the shoulder.

And also, the inclination angle θ₆ of the main groove 148 with respect to the circumferential direction of the tire (measured at a side of an acute angle. Moreover, when the center line of the groove is a curved line, the angle θ₆ means an angle with respect to a tangent of the center line of the groove.) is set so as to become larger in the right shoulder, and the main groove 146 inclines at the angle of approximately 55° with respect to the equatorial plane of the tire in the center and inclined at an angle of approximately 88° with respect to the plane in parallel to the of the equatorial plane of the tire in the shoulder.

In the illustrated embodiment, all of the main grooves 132, 134, 136, 138, 140, 142, 144, 146 and 148 have the same groove depth.

In the tread 112 are formed a plurality of blocks 152 each having a quadrilateral form by these main grooves 132, 134, 136, 138, 140, 142, 144, 146, 148. As shown in FIGS. 13A and 13B (FIG. 13A shows the block 152 at the inside in the mounting onto the vehicle and FIG. 13B shows the block 152 at the outside in the mounting onto the vehicle), a sub-groove 154 comprising a central main portion 154A, end portions 154B and connecting portions 154C is formed in each of the greater part of blocks 152 likewise the sub-groove 128 of FIG. 10, but only an offset direction of the central main groove 154A with respect to the short diagonal 156S differs from that of FIG. 10. Moreover, the definitions excluding the positioning relationship of the central main portion 154A are the same as in FIG. 10.

In the pneumatic tire 150 for the rear wheel, the central main portion 154A is arranged so as to offset from the short diagonal 156S toward the backward rotating direction of the tire (an arrow direction A) in any block 152.

In this embodiment, the depth of each of the main grooves 132, 134, 136, 138, 140, 142, 144 is 6 mm, and the depth of the central main portion 154A is' 2 mm, and the length L₁ of the central main portion 154A is approximately 47% of the length L₀ of the short diagonal 156S, and the depth of the end portion 154B is 2 mm.

And also, the offset quantity OL is 10% of the length of the long diagonal 156L.

The action of the pneumatic tire 150 will be explained below.

In the traction, the direction of the input applied to the blocks 152 in the tread 112 is the backward rotating direction of the tire (the direction of the arrow A).

Therefore, when traction is important as a driving wheel without requiring no the steering, as shown in the illustrated embodiment, the central main portion 154A is arranged so as to offset from the short diagonal 156S toward the backward rotating direction of the tire, whereby the rigidity of the small block segment at an inlet of the input (the side of the forward rotating direction of the tire) in the traction is increased. Thus, the irregular wear resulted from the traction is suppressed and the lowering of the wet performances due to the decrease of the groove width (the closure of the groove) of the sub-groove 154 in the traction can be controlled.

Although the above embodiments are described with respect to the pneumatic tires 110 and 150 for use in the rear drive vehicle in which the front wheel is a steering wheel (idle wheel) and the rear wheel is a driving wheel, if these tires are used in vehicles having a different drive system such as a front drive vehicle, a four-wheel-drive vehicle and the like, it is of course required to change the offset direction of the central main portion of the sub-groove so as to match with the properties of each vehicle.

Moreover, in case of attaching the importance to the braking, the position of the sub-groove may be set to the same position as the inner region in the widthwise direction of the vehicle mentioned in Fig. 10.

As to the arrangement of the central main portion of the sub-groove, it is possible to properly combine the arrangement offset from the diagonal with the inclination of the sub-groove toward the direction of the main stress applied from the road surface to the tire.

The following examples are given in illustration of the invention and are not intended as limitations thereof.

(Example 1) There are provided an example tire as shown in FIGS. 5 and 6 and a conventional tire having the same structure as in the example tire except that a sub-groove is extended vertically from an outer surface of a block. These tires have a tire size of 225/45R17. Each of these tires is inflated under an internal pressure of 220 kPa and mounted onto a driving wheel of domestic high-performance passenger car and actually run over a distance of 20000 km. The results after such a running test will be explained below.

In the conventional tire, as shown in FIG. 8, an sub-groove 226 is formed in a block 22 so as to extend a groove bottom thereof substantially vertically from the outer surface of the block. In the example tire, as shown in FIG. 9, a central main portion 26A of a sub-groove 26 is formed in the block 22 so as to incline a groove bottom thereof from the outer surface of the block in a direction of main stress.

In the blocks divided by the sub-grooves 26, 226 as shown in FIGS. 8 and 9, a block shape in a new tire state N is shown by dotted lines and a block shape in a used tire state M after the running test is shown by a solid line. Therefore, an irregularly worn quantity S is defined by a difference between a worn quantity S_{MAX} in a position indicating a largest wearing and a worn quantity S_{MIN} in a position indicating a smallest wearing (a remaining portion facing to the sub-groove without wearing by the falling-down of the block). That is, the irregularly worn quantity S is calculated by an equation of S = S_{MAX} - S_{MIN}.

As a result of the above running test, the irregularly worn quantity S of the conventional tire is 0.7 mm and the irregularly worn quantity S of the example tire is 0.5 mm. When the irregularly worn quantity S is represented by an index on the basis that the conventional tire is 100, the index value of the example tire is 71, from which it is clear that the tread life of the example tire is improved as compared with that in the conventional tire.

### (Example 2)

In order to further confirm the effect of the invention, there are provided a comparative tire and an example tire, and each of these tires is mounted onto a vehicle (a domestic high-performance passenger car) under an internal pressure of 220 kPa and run on a test course of a dry road surface to examine a steering stability on the dry road surface and measure an irregularly worn quantity after the running over a distance of 20000 km. And also, the steering stability on a wet road surface is examined. The measured results are shown in Table 1.

The example tire is a combination of a pneumatic tire 110 (for a front wheel) shown in FIG. 10 and a pneumatic tire 150 (for a rear wheel) shown in FIG. 12.

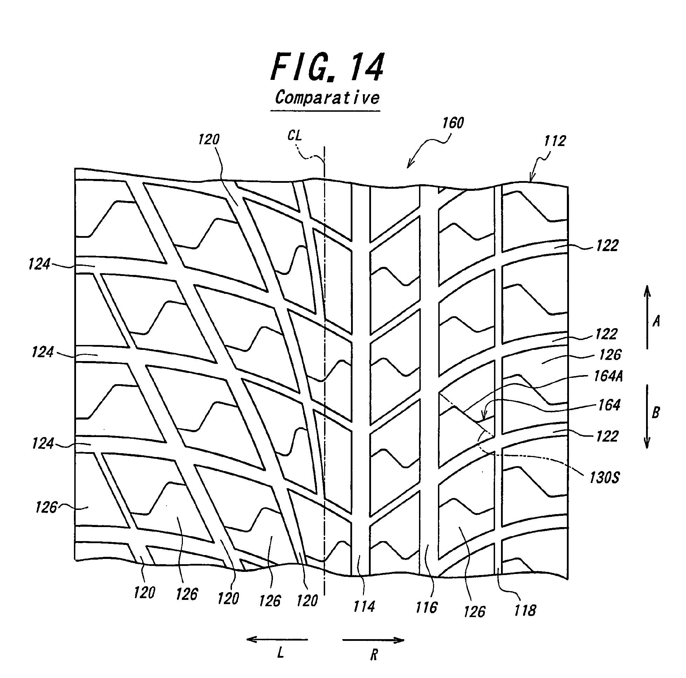

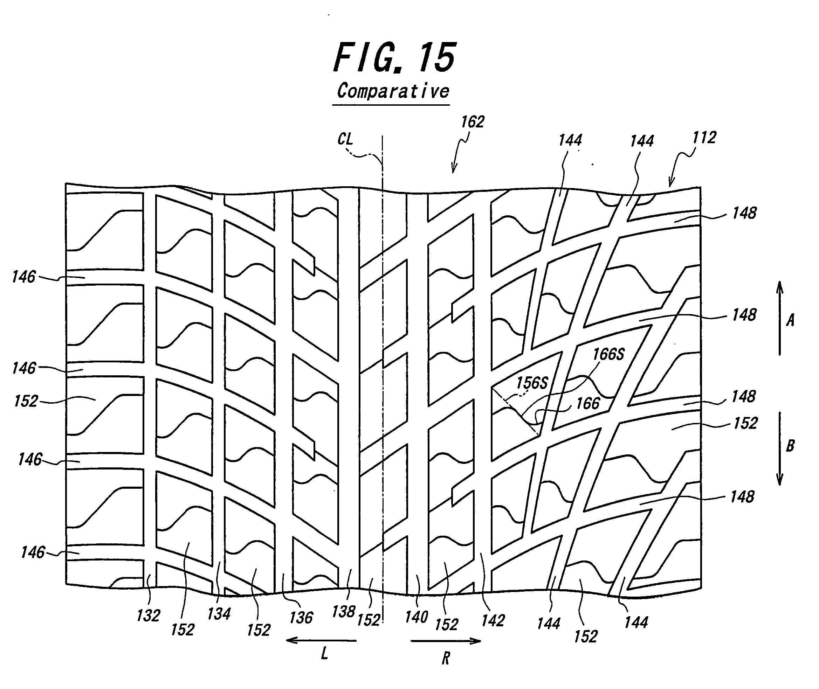

The comparative tire is a combination of a pneumatic tire 160 shown in FIG. 14 (for a right front wheel. Moreover, a tire for a left front wheel is symmetrical to that for the right front wheel) and a pneumatic tire 162 shown in FIG. 15 (for a right rear wheel. Moreover, a tire for a left rear wheel is symmetrical to that for the right rear wheel). In the tire 160, a central main portion 164A of a sub-groove 164 formed in the block 126 is arranged on a short diagonal 130S. In the tire 162, a central main portion 166A of a sub-groove 166 formed in the block 152 is arranged on a short diagonal 156S.

In Table 1, the evaluation of the irregular wear is represented by an index on the basis that the step difference quantity of the irregular wear generated in the block of the comparative tire is 100. The smaller the index value, the less the irregular wear and the more excellent the resistance to irregular wear.

The steering stability is evaluated by a feeling of a test driver and the evaluation is represented by an index on the basis that the comparative tire is 100. The larger the index value, the better the steering stability.

Moreover, the steering stability on the wet road surface is evaluated by running on the test course of a wet road surface (the water depth is approximately 1-3 mm ).

**Table 1**

| | Comparative tire | Example tire |
|---|---|---|
| Irregularly worn quantity in block (index value) | 100 | 70 |
| Steering stability on dry road surface (index value) | 100 | 100 |
| Steering stability on wet road surface (index value) | 100 | 130 |

As mentioned above, the pneumatic tire according to the invention having the above construction has an excellent effect that the wear resistance can be improved in correspondence to the difference of the input directions of the external forces generated by the difference of the tire mounting position.

## Claims

1. A pneumatic tire (110) comprising a tread portion (112) having a plurality of blocks (126), each of which blocks being defined into substantially a quadrilateral form by two pairs of main grooves each having a different angle with respect to an equatorial plane (CL) of the tire and having a plurality of blocks, each of which blocks having at least one sub-groove (128) crossing with the block, **characterized in that** at least a central main portion (128A) of the sub-groove is inclined substantially in the same direction as any one of diagonals (130) of the block and is arranged at a position offset from the diagonal.

2. A pneumatic tire as claimed in claim 1, **characterized in that** the central main portion (128A) is arranged so as to offset from the diagonal toward a side opposite to a forward rotating direction of the tire.

3. A pneumatic tire as claimed in claim 1, **characterized in that** the central main portion (128A) of the sub-groove is arranged so as to offset from the diagonal toward a forward rotating direction of the tire.

4. A pneumatic tire as claimed in any of claims 1 to 3, **characterized in that** the central main portion (128A) of the sub-groove in the block located in an outer region of the tread in a widthwise direction of a vehicle mounted with the tire is arranged so as to offset inward from the diagonal in the widthwise direction of the vehicle, and the central main portion of the sub-groove in the block located in an inner region of the tread in the widthwise direction of the vehicle mounted with the tire is arranged so as to offset from the diagonal toward the forward rotating direction of the tire.

5. A pneumatic tire as claimed in any of claims 1 to 4, **characterized in that** the tire is mounted onto a vehicle at a left side thereof and the sub-groove (128) is arranged at a position offset from the diagonal toward a right side in the widthwise direction of the vehicle.

6. A pneumatic tire as claimed in any of claims 1 to 4, **characterized in that** the tire is mounted onto a vehicle at a right side thereof and the sub-groove (128) is arranged at a position offset from the diagonal toward a left side in the widthwise direction of the vehicle.

7. A pneumatic tire as claimed in any of claims 1 to 6, **characterized in that** the block (126) is substantially a parallelogram form and the central main portion (128A) of the sub-groove (128) is arranged substantially in parallel to a short diagonal (130S) of the block.

8. A pneumatic tire as claimed in any of claims 1 to 7, **characterized in that** the central main portion (128A) of the sub-groove (128) is formed so that the groove bottom is inclined from the surface side of the block (126) in a direction of a main stress applied from a road surface to the block.

9. A vehicle wherein a pneumatic tire as claimed in claim 2 is mounted as a rear tire, and a pneumatic tire as claimed in claim 3 is mounted as a front tire.
